# EUROPÄISCHE PATENTSCHRIFT

(11) **EP 3 764 513 B1**
(45) Veröffentlichungstag und Bekanntmachung des Hinweises auf die Patenterteilung: **07.06.2023**
(21) Anmeldenummer: 20179878.2
(22) Anmeldetag: 15.06.2020
(51) Int. Cl.: H02K 3/487, H02K 7/14

(54) **ELEKTROMOTOR UND KÜHLERLÜFTER MIT DERARTIGEM ELEKTROMOTOR**
ELECTRIC MOTOR AND COOLING FAN COMPRISING THE SAME
MOTEUR ÉLECTRIQUE ET VENTILATEUR DE REFROIDISSEMENT COMPRENANT UN TEL MOTOEUR ÉLECTRIQUE

(30) Priorität: 08.07.2019 DE 102019210028
(43) Veröffentlichungstag der Anmeldung: 13.01.2021
(73) Patentinhaber: Brose Fahrzeugteile SE & Co. Kommanditgesellschaft, Würzburg, 97076 Würzburg (DE)
(72) Erfinder: FELLA, Maximilian, 97078 Würzburg (DE); HERMANN, Eugen, 96269 Großheirath (DE); ZHANG, Sunny, 5658 PM Eindhoven (NL); SCHULZ, Janik, 97072 Würzburg (DE)
(74) Vertreter: FDST Patentanwälte

(56) Entgegenhaltungen:
- EP-A1- 3 512 077
- GB-A- 2 475 604
- JP-A- 2009 189 145
- US-A1- 2015 076 954

## Beschreibung

Die Erfindung betrifft einen Elektromotor mit einem um eine in Axialrichtung verlaufende Drehachse drehbar gelagerten Rotor und einen Stator mit radial gerichteten Statorzähnen mit T-förmig erweiterten Pollaschen. Ferner betrifft die Erfindung einen Kühlerlüfter, insbesondere für ein Kraftfahrzeug, mit einem solchen Elektromotor.

Ein bürstenloser Elektromotor umfasst einen drehbar gelagerten Rotor (Läufer) sowie einen feststehenden Stator. Dabei weist der Stator radial, beispielsweise sternförmig, angeordnete Statorzähne auf, zwischen denen jeweils eine Statornut gebildet ist. In diese Statornuten ist eine Statorwicklung in Form einzelner Spulen aufgenommen, welche insbesondere aus einem Draht gewickelt sind. Die miteinander beispielsweise in Stern- oder Dreieckschaltung verschalteten Spulen werden mit einem Wechselstrom zur Erzeugung eines Drehfeldes beaufschlagt. Ferner umfasst der Rotor beispielsweise Permanentmagnete, deren Magnetfeld mit dem mittels der Spulen erzeugten Drehfeld des Stators wechselwirkt, so dass der Rotor drehangetrieben wird.

Dabei können der Rotor sowie der Stator jeweils als Blechpaket ausgebildet sein, insbesondere um Wirbelstromverluste zu vermeiden. Beispielsweise ist aus der WO 2010/145841 A2 ein Elektromotor mit einem Stator bekannt, der aus einem Blechpaket mit übereinander gestapelten Einzelblechen ausgeführt sein kann. Dieser weist ein umfangsseitiges Joch und eine gerade Anzahl an Statorzähnen auf, die radial nach innen abstehen. Dabei ist in Umfangsrichtung jeder zweite Statorzahn wicklungsfrei. Die eine Wicklung tragenden Statorzähne weisen ferner am inneren Zahnende in Umfangsrichtung abstehende Pollaschen auf.

Bei Betrieb eines solchen Elektromotors mit einem ein Blechpaket aufweisenden Stator kann eine (Eigen-)Schwingung des Stators bei bestimmten Drehzahlen angeregt werden. Mit anderen Worten handelt es sich um eine Resonanz. Diese äußert sich nachteilig beispielsweise in einer erhöhten Geräuschentwicklung. Weiterhin sind aufgrund dieser angeregten Schwingungen eine zusätzliche Belastung und ein damit einhergehender Verschleiß der mit dem Stator in Verbindung stehenden Komponenten erhöht.

Aus der EP 3 512 077 A1 ist ein Elektromotor bekannt, zwischen dessen T-förmig erweiterten Statorzähnen jeweils ein Nutenschlitz gebildet ist, in welchen ein Versteifungselement eingebracht ist.

In der US 2015/076 954 A1 ist ein Stator offenbart, zwischen dessen Statorzähnen freiendseitig ein Keil eingebracht ist.

In der JP 2009 189 145 A ist ein Stator beschrieben, bei dem ein Schutzelement einen Schlitz zwischen den Statorzähnen verschließt.

Aus der GB 2 475 604 A ist ein Dynamoelektrische Maschine bekannt. Diese weist einen Verschlusskeil für eine Nut auf, welche wiederum zur Aufnahme einer Statorstabwicklung vorgesehen ist.

Der Erfindung liegt die Aufgabe zugrunde, einen Elektromotor mit verbesserten akustischen Eigenschaften anzugeben. Ferner soll ein Kühlerlüfter mit einem solchen Elektromotor angegeben werden.

Bezüglich des Elektromotors wird die Aufgabe erfindungsgemäß gelöst durch die Merkmale des Anspruchs 1. Hinsichtlich des Kühlerlüfters wird die Aufgabe erfindungsgemäß erfüllt durch die Merkmale des Anspruchs 10. Vorteilhafte Weiterbildungen und Ausgestaltungen sind Gegenstand der Unteransprüche.

Hierzu umfasst der Elektromotor einen um eine in Axialrichtung verlaufende Drehachse drehbar gelagerten Rotor und einen Stator mit einem Blechpaket, welches ein Statorjoch und von diesem radial gerichtete Statorzähne des Stators bildet, wobei die Statorzähne unter Bildung von sich in Umfangsrichtung des Stators erstreckenden Pollaschen (Zahnspitzen) zahnfußseitig (freiendseitig, polschuhseitig) T-förmig erweitert sind.

Ferner sind zwischen den Statorzähnen sogenannte Statornuten zur Aufnahme von Spulen einer Statorwicklung und zwischen einander zugewandten Pollaschen jeweils ein Nutenschlitz gebildet.

Die Pollaschen bilden jeweils eine Anlageschulter. Insbesondere sind die Anlageschultern mittels einer Anlagefläche oder mittels einer Anlagekontur der jeweiligen Pollasche gebildet. Des Weiteren ist eine Anzahl von Versteifungselementen vorgesehen, welche in eine entsprechende Anzahl von Nutenschlitzen eingebracht sind. Die Versteifungselemente sind dabei an den einander zugewandten Pollaschen benachbarter Statorzähne in Radialrichtung mittels der aus diesen Pollaschen gebildeten Anlageschultern gehalten.

Weiterhin weist jedes der Versteifungselemente im Anlagebereich für die jeweilige Anlageschulter eine Kontur auf, welche der Reduzierung einer Kontaktfläche mit dieser Anlageschulter dient. Dabei dient die Kontur einer Reduzierung einer Kontaktfläche mit dem Blechpaket der entsprechenden Pollasche.

Unter einer Anzahl von Versteifungselementen sind hierbei ein, zwei oder mehrere Versteifungselemente zu verstehen. Beispielsweise ist jeweils ein Versteifungselement in Umfangsrichtung in jeden zweiten Nutenschlitz eingebracht. Vorzugsweise entspricht die Anzahl der Versteifungselemente jedoch der Anzahl der Nutenschlitze, so dass in jeden Nutenschlitz ein Versteifungselement eingebracht ist.

Unter T-förmig erweitert wird verstanden, dass die Statorzähne einen T-förmigen Querschnitt in einer Ebene senkrecht zur Axialrichtung aufweisen. Die sich vom Statorjoch entlang der Radialrichtung erstreckenden Statorzähne bilden dabei den vertikalen T-Schenkel (Zahnschaft) der T-Form, während die in Umfangsrichtung, also senkrecht zur Axial- und zur Radialrichtung orientierten Pollaschen den horizontalen T-Schenkel (Fuß) der T-Form bilden. Dabei ist der horizontalen T-Schenkel freiendseitig, d.h. an der dem Rotor bzw. dem Spalt zwischen diesem und dem Stator zugewandten Seite des Statorzahns, angeordnet. Insbesondere bilden die horizontalen T-Schenkel dabei jeweils einen Polschuh.

Die Versteifungselemente sind beispielsweise zusätzlich zu dem dargelegten Formschluss in Radialrichtung aufgrund der Anlageschulter zusätzlich kraftschlüssig, insbesondere durch Einpressen und/oder stoffschlüssig, beispielsweise durch Verkleben, mit den entsprechenden Pollaschen gefügt.

Besonders vorteilhaft ist mittels der Versteifungselemente eine Versteifung des Stators realisiert. Die Erfindung geht dabei von der Überlegung aus, dass das bzw. die Versteifungselemente hierbei eine Kraft, insbesondere in Umfangsrichtung, auf die Statorzähne und auf diese Weise auf den gesamten Stator bewirken, so dass eine Schwingung des Stators gedämpft und/oder eine Eigenfrequenz der Eigenschwingung des Stators gezielt in einen Frequenzbereich verschoben, insbesondere erhöht, ist, in welchem eine Schwingungsanregung nicht zu erwarten ist. Zusammenfassend ist auf diese Weise die Akustik des Elektromotors verbessert und ein aufgrund der Schwingung auftretender Verschleiß verhindert.

Weiterhin geht die Erfindung von der Überlegung aus, dass ein aus einem Kunststoff gebildetes Versteifungselement nicht ausreichend temperaturbeständig hinsichtlich der bei Betrieb des Elektromotors auftretenden Temperaturen ist, so dass die Dämpfung und/oder die Frequenzverschiebung nicht oder nicht ausreichend erfolgt. Zusätzlich wäre weiterhin ein aus Kunststoff hergestelltes Versteifungselement für eine solche Frequenzverschiebung nicht ausreichend steif.

Infolge dessen ist das Versteifungselement aus einem Metall oder aus einer Legierung gebildet oder weist ein Metall oder eine Legierung auf. Mittels diesen ist eine Steifigkeit des Stators ausreichend erhöht, so dass eine Anregung einer Schwingung verringert oder vermieden ist.

Dabei ist aufgrund der im Anlagebereich für die jeweilige Anlageschulter angeordneten Kontur des Versteifungselements und der damit einhergehenden Reduzierung der Kontaktfläche des Versteifungselements mit dem Blechpaket des Stators eine Bildung von Wirbelströmen vermieden oder zumindest reduziert. Infolge dessen ist vorteilhaft auch ein Wirkungsgrad des Elektromotors verbessert, also erhöht.

Vorzugsweise wird ein korrosionsbeständiges Metall oder eine entsprechende Legierung hierzu gewählt. Beispielsweise ist das Versteifungselement aus einem nicht magnetischen und korrosionsbeständigen Edelstahl wie X5CrNi18-10 gebildet.

Zweckmäßigerweise werden die Versteifungselemente nach dem Einbringen der Spulen, welches beispielsweise mittels einer sog. Nadelwicklung erfolgt, in die entsprechenden Nutenschlitze eingebracht. Auf diese Weise ist es weiterhin ermöglicht, dass die Wicklung bzw. das Werkzeug, welches die Wicklung durchführt, durch die Nutenschlitze verfährt. Insbesondere ist somit eine Änderung des Blechpakets des Stators nicht notwendig. Das Blechpaket des Stators kann also mit den bisherigen Verfahren und dazu verwendeten (Stanz-)Werkzeugen hergestellt werden.

Gemäß einer vorteilhaften Weiterbildung ist das Blechpaket aus einer Anzahl von Einzelblechen gebildet. Dabei weist jedes Einzelblech einen ringförmigen Jochabschnitt und mit diesem einteilige, also monolithisch angeformte, radial gerichtete Blechzähne auf, die zahnfußseitig unter Bildung von sich in Umfangsrichtung des Stators erstreckenden Blechlaschen T-förmig erweitert sind. Das Statorjoch ist aus den Jochabschnitten der Einzelbleche, die Statorzähne aus den Blechzähnen der Einzelbleche und die Pollaschen aus den Blechlaschen der Einzelbleche gebildet.

Vorteilhafterweise ist ein derartiger Stator mit aus einteiligen Einzelblechen gebildetem Blechpaket mit vergleichsweise geringem Aufwand herstellbar und auch hergestellt. Beispielsweise werden bei Statoren im sog. Stern-Joch-Design bei deren Herstellung das Joch und die Statorzähne als einzelne Komponenten aus den Einzelblechen gestanzt und müssen anschließend miteinander gefügt werden. Bei einem bevorzugt mit einteiligen Einzelblechen paketierten Stator entfällt dieser Schritt, weshalb sowohl ein Verfahren zur Herstellung des Stators als auch ein hierzu entsprechend notwendiges Werkzeug kostensparend sind.

Gemäß einer vorteilhaften Ausgestaltung weisen die Pollaschen freiendseitig eine in Umfangsrichtung offene und sich in Axialrichtung erstreckende Nut mit zwei in Radialrichtung zueinander beabstandeten und einander gegenüberliegenden Nutenwänden auf. Eine der beiden Nutenwände bildet die Anlageschulter für das Versteifungselement in einer Radialrichtung, während dann die andere Nutenwand die Anlageschulter für das Versteifungselements in der entgegengesetzten Radialrichtung bildet.

Die parallel zueinander orientierten Nutenwände erstrecken sich in einer mittels der Umfangrichtung an der Stelle (an der Radialposition) der Nut und der Axialrichtung aufgespannten Ebene. Ein die beiden Nutenwände verbindender Nutenboden erstreckt sich entsprechend in einer mittels der Axialrichtung und der Radialrichtung aufgespannten Ebene. Mit anderen Worten fassen die Nuten jeweils in Umfangsrichtung in den Statorzahn ein.

Gemäß einer geeigneten Weiterbildung weist der Stator, bevorzugt lediglich dessen Blechpaket eine Kunststoffumspritzung auf, mittels welcher eine der Nutenwände gebildet ist. Vorzugsweise sind die statorjochseitige Nutenwand mittels der Kunststoffumspritzung und die rotorseitige Nutenwand mittels des Blechpakets des Stators gebildet. Beispielsweise weist das Blechpaket des Stators zur Bildung der Nut eine, insbesondere L-förmige, Einkerbung an den umfangsseitigen Enden der Pollaschen an deren dem Joch zugewandten Seite auf, so dass mittels der Einkerbung der Nutenboden und einer der Nutenwände, insbesondere die rotorseitige Nutenwand, gebildet ist. Die Einkerbung ist dabei zur Bildung der Nut von der Kunststoffumspritzung ausgespart oder ausgenommen.

In einer zweckmäßigen Ausgestaltung ist das Versteifungselement als Platte oder Plättchen, d. h. als platten- oder plättchenartiges Bauteil ausgeführt. Insbesondere ist das Versteifungselement rechteckförmig. Die flächigen Seiten der Platte werden im Folgenden als Breitseiten bezeichnet. An diese grenzen zwei zueinander beabstandete und zweckmäßigerweise zueinander parallel orientierte erste Schmalseiten an, welche im Folgenden als Längsseiten bezeichnet werden. Insbesondere erstrecken sich die Längsseiten im Montagezustand des Versteifungselements in Axialrichtung. Das Versteifungselement wird also derart in den Nutenschlitz eingebracht, dass die Längsseiten an den Pollaschen angeordnet sind. Vorzugsweise weist dabei die Breitseite und entsprechend die Längsseite (die erste Schmalseite) eine Ausdehnung (Länge) auf, welche der Ausdehnung des Nutenschlitzes in Axialrichtung entspricht.

An die beiden Breitseiten und an die beiden Längsseiten grenzen zwei zueinander beabstandete und zweckmäßigerweise zueinander parallel orientierte zweite Schmalseiten an, welche als stirnseitige Schmalseiten, Querseiten oder als Stirnseiten bezeichnet werden. Diese erstrecken sich im Montagezustand des Versteifungselements von einer der Pollaschen zur anderen Pollasche, welche den Nutenschlitz bilden. Mit anderen Worten sind stirnseitigen Querseiten diejenigen Schmalseiten, welche nicht zur Herstellung der Fügung nach Art einer Spundung mit den Pollaschen ausgebildet sind und welche im Montagezustand des Versteifungselements im Elektromotor senkrecht zur Axialrichtung orientiert sind.

Die Kontur zur Reduzierung der Kontaktfläche mit den Anlageschultern ist mittels einer Aussparung oder mittels einer Ausnehmung der der jeweiligen Pollasche zugewandten Schmalseite, also der Längsseite, gebildet. Vorzugsweise sind mehrere solcher Aussparungen oder Ausnehmungen vorgesehen. Beispielsweise alternativ ist die Kontur mittels einer Vertiefung oder mittels angeformten Fortsätzen gebildet, wobei die Vertiefung bzw. die Fortsätze an der jeweiligen Längsseite und zusätzlich oder alternativ an der Breitseite im Bereich der jeweiligen Längsseite angeordnet sind.

Sofern Nuten in den jeweiligen Pollaschen ausgebildet sind, sitzt das Versteifungselement dort vorzugsweise nach Art einer Spundung ein und ist derart formschlüssig bezüglich der Radialrichtung gefügt. Dabei ist an den einander gegenüberliegenden Längsseiten (ersten Schmalseiten) des plattenförmigen Versteifungselements jeweils ein zur Nut komplementärer Fügefortsatz angeordnet. Alternativ weist das plattenförmige Versteifungselement eine Ausdehnung (Dicke) senkrecht zur Breitseite auf, welche der Nutausdehnung in Radialrichtung entspricht, so dass das Freiende des Versteifungselements mit der Nut gefügt wird. Allenfalls ist zweckmäßigerweise ein Einpressmaß zugelassen. Insbesondere sind dabei unter Bildung der Kontur zur Reduzierung der Kontaktfläche zwischen dem Versteifungselement und dem Blechpaket des Stators in den Fügefortsatz bzw. in das Freiende die Aussparungen, die Vertiefungen oder Einkerbungen eingebracht.

Das Versteifungselement ist beispielsweise mehrteilig ausgeführt, indem mehrere plattenförmige Teile vorgesehen sind. Dabei sind entweder deren Breitseiten einander zugewandt, oder alternativ sind deren Querseiten (zweiten Schmalseiten) einander zugewandt. Im Montagezustand sind die Teile des Versteifungselements also in Radialrichtung hintereinander bzw. in Axialrichtung übereinander angeordnet.

Vorzugsweise ist das Versteifungselement jedoch einteilig und symmetrisch ausgeführt. Besonders bevorzugt ist das Versteifungselement zu Längsachse und zur Querachse spiegelsymmetrisch ausgeführt. Mit anderen Worten ist das Versteifungselement vorzugsweise spiegelsymmetrisch bezüglich zweier Ebenen ausgeführt, welche jeweils durch die Mittelsenkrechte der Breitseite und parallel zur Längsseite bzw. parallel zur Querseite verlaufen. Aufgrund der Symmetrie und der einteiligen Ausführung ist die Montage des Versteifungselements in unterschiedlichen Orientierungen ermöglicht und identisch und somit besonders fehlersicher. Deshalb ist eine Montage des Versteifungselements mit falscher Orientierung vorteilhaft vermieden. Das Versteifungselement kann somit für die Montage kostensparend als Schüttgut bereit gestellt werden.

In einer Ausführungsform, welche nicht vom Wortlaut der Ansprüche umfasst ist, sind die Versteifungselemente alternativ hierzu beispielsweise als ein Hybridteil ausgebildet. Diese weisen also einen aus einem Metall oder aus einer Legierung gebildeten, insbesondere streben- oder fachwerkartigen, Grundkörper auf, welcher mit Kunststoff umspritzt ist. Mittels des Grundkörpers ist die Schwingung des Stators gedämpft und/oder eine Eigenfrequenz der Eigenschwingung des Stators gezielt in einen Frequenzbereich verschoben, in welchem eine Schwingungsanregung nicht zu erwarten ist. Der Kunststoff weist eine im Vergleich zum Grundkörper höheren elektrischen Widerstand auf, so dass der elektrische Widerstand des gesamten Versteifungselements verringert und Wirbelströme weiter reduziert sind.

In einer geeigneten Ausgestaltung ist das Versteifungselement aus einem nicht magnetischen Material gebildet. Insbesondere wird hierunter eine magnetische Permeabilität des Materials kleiner 5 (µᵣ < 5), vorzugsweise gleich 1 (µᵣ = 1), und eine elektrische Leitfähigkeit (sigma) kleiner 40 Siemens/Meter (o < 40 S m⁻¹), vorzugsweise kleiner 1,4 Siemens/Meter (o = 1,4 S m⁻¹), verstanden.

Im Vergleich zur Verwendung magnetischer Materialien für das Versteifungselement, erfolgt derart an den Pollaschen kein magnetischer Schluss, weshalb vorteilhafterweise eine Nutzleistung des Motors nicht verringert wird.

Unabhängig von der Ausgestaltung ist jedes der Versteifungselemente zur Erhöhung dessen elektrischen Widerstands mit einer Beschichtung versehen. Auf diese Weise sind Wirbelströme und Wirbelstromverluste weiter reduziert.

Das Versteifungselement weist in vorteilhafter Ausgestaltung an zumindest einer der (stirnseitigen) Querseiten eine Fügekontur für einen Formschluss bezüglich der Axialrichtung mit der jeweiligen Pollasche auf. Vorzugsweise weisen beide stirnseitigen Querseiten jeweils eine Fügekontur auf.

Beispielsweise ist die Fügekontur an einer ersten der stirnseitigen Querseiten als eine weitere Anlageschulter ausgebildet, so dass das Versteifungselement gegen ein Herauslösen in Richtung von der ersten Querseiten zur anderen, zweiten Querseite hin, also gegen ein Herauslösen in axialer Richtung, gesichert ist. Beispielsweise weist die zweite Querseite zusätzlich einen zu dieser Seite senkrecht abstehende Rast- oder Schnapphaken auf, welcher mit einer korrespondierenden Kontur verrastet, wobei die Kontur insbesondere an der Kunststoffumspritzung des Stators angeordnet oder angeformt ist.

Zweckmäßigerweise ist die Fügekontur als Zapfen ausgebildet, welche im Montagezustand einen axialen Hintergriff mit den jeweiligen Pollaschen ausbildet. Beispielsweise stehen die Zapfen bei einer Ausführung des Versteifungselements in der Edelstahlvariante senkrecht zur entsprechenden stirnseitigen Schmalseite. Nach dem Einbringen des Versteifungselements in den Nutenschlitz werden die Zapfen zur Ausbildung des axialen Hintergriffs in Umfangsrichtung verbogen. In der Kunststoffvariante sind die Zapfen des Versteifungselements beispielsweise endseitig in Umfangsrichtung voneinander weg geneigt. Im Zuge der Montage werden die Zapfen federelastisch (aufeinander zu) ge- oder verbogen, so dass diese bei vollständigem Einbringen die entsprechende Pollasche des Statorzahns zumindest mit einer axial gerichteten Komponente hinterfassen.

Vorzugsweise zusätzlich ist die das Versteifungselement aufnehmende Nut in Axialrichtung nicht durchgehend. Hierbei weist die Nut an einer deren Endseiten bezüglich der Axialrichtung eine Anlage für das Versteifungselement auf. Das Versteifungselement wird im Zuge der Montage dann von der anderen Endseite her in die Nut eingebracht. Beispielsweise hintergreift die Fügekontur dabei die Anlage, so dass der Formschluss in Axialrichtung vergleichsweise zuverlässig ausgebildet ist.

Das Versteifungselement ist also in Folge des Formschlusses gegen ein Lösen gesichert, was hinsichtlich der Sicherheit bei Betrieb des Elektromotors für einen Benutzer sowie zur Vermeidung einer Beschädigung des Elektromotors oder anderer Komponenten, welche in der Nähe des Elektromotors angeordnet sind, besonders vorteilhaft ist.

In vorteilhafter Ausgestaltung ist das Versteifungselement mit mindestens einer in die jeweilige Statornut mündenden Durchgangsöffnung versehen. Insbesondere weist das Versteifungselement eine als Aussparung ausgeführte oder mittels einer Bohrung eingebrachte Durchgangsöffnung auf, welches durchgängig ist und senkrecht zur Breitseite des Versteifungselements verläuft. Vorzugsweise weist das Versteifungselement mehrere solcher Durchgangsöffnungen auf. Die Durchgangsöffnungen sind beispielsweise kreisrund, langlochartig oder schlitzförmig. Mittels dieser Durchgangsöffnung sind zum einen eine Luftzirkulation durch das Versteifungselement ermöglicht und somit eine Kühlung verbessert. Des Weiteren können eventuell in den Elektromotor eingetretene Schmutzpartikel oder Wasser durch diese Durchgangsöffnungen erleichtert aus der Statornut austreten. Zum anderen dienen die Durchgangsöffnungen zur Verringerung bzw. Vermeidung von Wirbelstromverlusten.

Gemäß einer vorteilhaften Ausbildung weist ein Kühlerlüfter, insbesondere eines Kraftfahrzeugs, einen Elektromotor in einen der oben beschriebenen Varianten auf, der insbesondere ein Lüfterrad rotatorisch antreibt. Insbesondere weist dabei der erfindungsgemäße Elektromotor des Kühlerlüfters eine der Anzahl der Statornuten entsprechende Anzahl von Versteifungselementen auf, welche mittels an Pollaschen der Statorzähne angeordneten Anlageschultern in den entsprechenden Nutenschlitzen gehalten werden. Hierbei weisen die Versteifungselemente jeweils eine Kontur im entsprechenden Anlagebereich auf, aufgrund welcher eine Kontaktfläche mit den Anlageschultern reduziert ist. Insbesondere weisen die Pollaschen zudem freiendseitig eine in Umfangsrichtung offene und sich in Axialrichtung erstreckende Nut mit zwei in Radialrichtung zueinander beabstandeten und einander gegenüberliegenden Nutenwänden auf, wobei beispielsweise eine der Nutenwände mittels einer Kunststoffumspritzung des Stators gebildet ist. Besonders vorteilhaft sind mittels des Versteifungselements akustische Eigenschaften des Kühlerlüfters verbessert. So ist folglich eine als vergleichsweise angenehm empfundene Akustik bei Betrieb des Kühlerlüfters realisiert.

Nachfolgend werden Ausführungsbeispiele der Erfindung anhand einer Zeichnung näher erläutert. Darin zeigen:
- Fig. 1: in einer Explosionsdarstellung einen Kühlerlüfter mit einem Elektromotor, welcher einen als Innenläufer ausgebildeten Rotor und einen Stator aufweist, dessen Statorzähne sich radial zum Rotor hin erstrecken, wobei die Statorzähne freiendseitig unter Bildung von Pollaschen erweitert sind,
- Fig. 2a,b: in einer Draufsicht bzw. in vergrößertem Ausschnitt in perspektivischer Ansicht das Blechpaket des Stators, welches aus einer Anzahl von Einzelblechen gebildet ist, wobei die Einzelbleche jeweils einem Jochabschnitt aufweisen von dem sich monolithisch an den Jochabschnitt angeformte Statorzähne radial erstrecken,
- Fig. 3: in perspektivischer Ansicht den Stator mit Blechpaket und mit einer Kunststoffumspritzung, wobei in zwischen den Pollaschen gebildeten Nutenschlitzen jeweils ein Versteifungselement zur Versteifung des Stators eingebracht und mittels der Pollaschen gebildeten Anlageschultern gehalten sind,
- Fig. 4: in vergrößertem Maßstab den Bereich IV der Fig. 3, wobei das Versteifungselement an dessen Querseiten jeweils eine als Zapfen ausgebildete Fügekontur aufweist, die mit den Pollaschen im Montagezustand einen axialen Hintergriff ausbilden.
- Fig. 5: den Stator gemäß der Fig. 4 mit herausgenommenen Versteifungselementen, wobei der Stator im Bereich der Pollaschen eine in Umfangsrichtung offene Nut zur Aufnahme des Versteifungselements aufweist,
- Fig. 6a,b: in perspektivischer Ansicht bzw. in Draufsicht das Versteifungselement mit in dessen Breitseite eingebrachten Durchgangsöffnungen, mit senkrecht zur Querseite emporstehenden Zapfen und mit an diese Querseite angrenzenden Längsseiten, welche eine Kontur zur Reduzierung einer Kontaktfläche mit den Anlageschultern aufweisen, und
- Fig. 7: einen Querschnitt durch den Stator mit zwei weiteren in die entsprechenden Nutenschlitze eingebrachten alternativen Ausgestaltungen des Versteifungselements, wobei die Pollaschen der Statorzähne jeweils als eine Anlageschulter für die Versteifungselemente dienen.

Einander entsprechende Teile sind in allen Figuren mit den gleichen Bezugszeichen versehen.

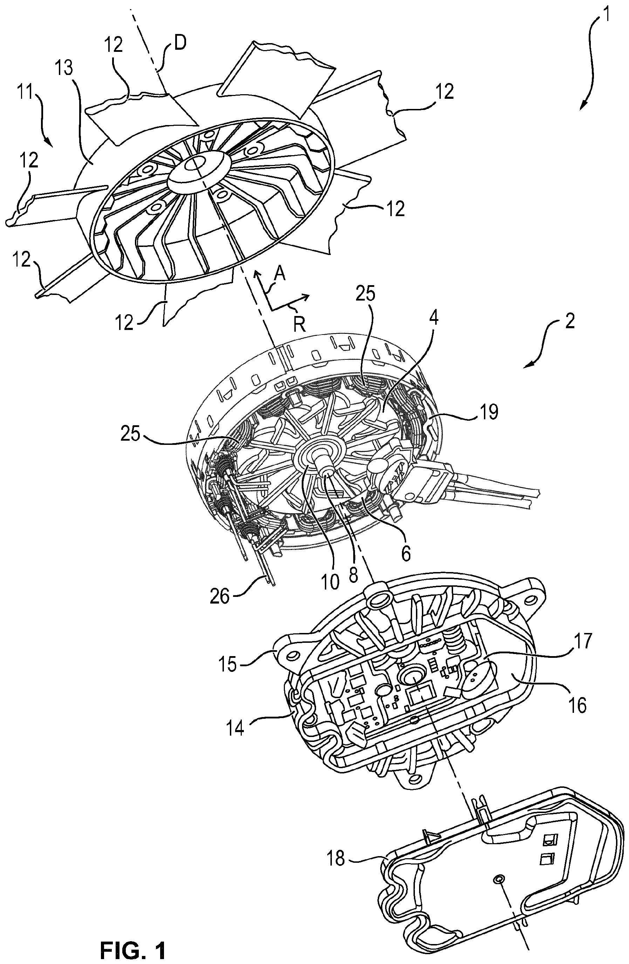

Fig. 1 zeigt in einer Explosionsdarstellung einen Kühlerlüfter 1, welcher insbesondere für eine Verwendung in einem nicht weiter dargestellten Kraftfahrzeug vorgesehen ist, mit einem Elektromotor 2 mit einem Rotor 4 und mit einem Stator 6. Der Rotor 4 ist um eine Drehachse D mittels eines Achsstifts 8 rotatorisch gelagert, wobei die Drehachse D in einer Axialrichtung A verläuft. Der Achsstift 8 ist dabei mittels Lagern 10, welche jeweils endseitig am Achsstift 8 angeordnet sind, gelagert. In der Zeichnung ist der Rotor 4 als ein Innenläufer ausgebildet, d.h. der Stator 6 umfasst den Rotor 4 außenseitig bezüglich einer zur Axialrichtung A senkrecht verlaufenden Radialrichtung R. Jedoch ist in einer nicht weiter dargestellten Variante des erfindungsgemäßen Elektromotors 2 der Rotor 4 als ein Außenläufer ausgebildet. Hierbei gelten die im Folgenden dargelegten Ausführungen in analoger Weise.

Der Rotor 4 steht mit einem Lüfterrad 11 in Antriebsverbindung. An dessen Außenumfang weist dieses Luftleitschaufeln 12 auf, welche zum Zwecke einer verbesserten Übersicht lediglich ausschnittsweise dargestellt sind. Das Lüfterrad 11 weist eine zentrale Kappe 13 auf, welche am Rotor 4 des Elektromotors 2 befestigt ist.

Auf der dem Lüfterrad 11 abgewandten Stirnseite des Elektromotors 2 ist ein Motorträger 14 mit Flanschen 15 zur Befestigung des Kühlerlüfters angeordnet. Der Motorträger 14 weist des Weiteren auf dessen dem Lüfterrad 11 abgewandten Seite ein Elektronikfach 16 für eine Motorelektronik 17 auf, welches Im Montagezustand mittels eines Elektronikfachdeckels 18 abgedeckt ist.

Der Stator 6 weist ein im Wesentlichen hohlzylinderförmiges Statorjoch 19 auf. Von diesem erstrecken sich radial zum Rotor 4 hin dessen Statorzähne 20. Die Statorzähne sind dabei freiendseitig, also an der dem Rotor 4 zugewandten Ende, in einer Umfangsrichtung U bezüglich des Stators 6, mit anderen Worten senkrecht zur Axialrichtung A und senkrecht zur Radialrichtung R, unter Bildung von Pollaschen 21 erweitert. Folglich bilden die Statorzähne 20 in einer Ebene senkrecht zur Axialrichtung A eine T-Form, deren horizontaler T-Schenkel mittels der Pollaschen 21 gebildet ist.

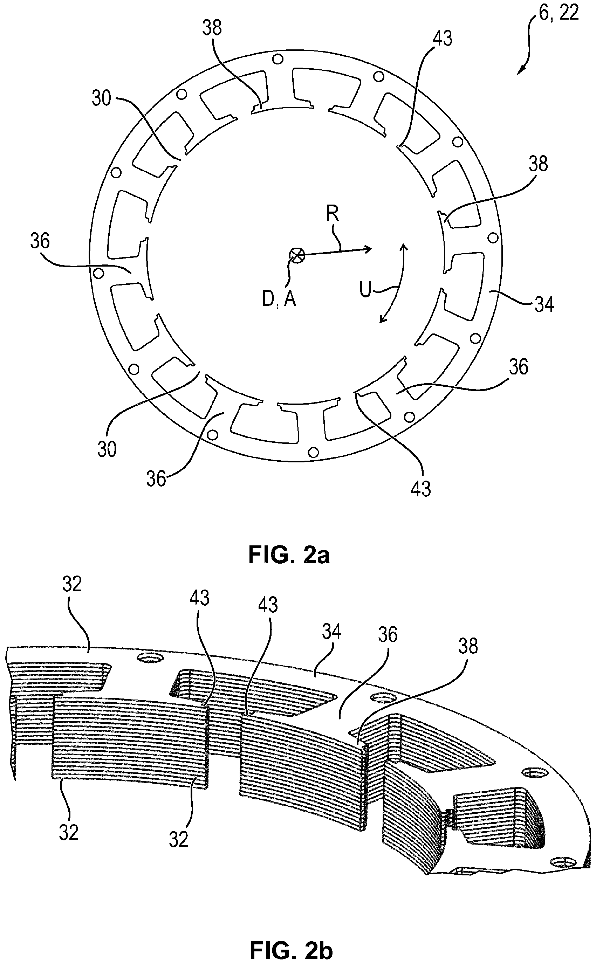

Hierbei weist der Stator 6 ein Blechpaket 22, welches in Fig. 2a und Fig. 2b dargestellt ist, sowie eine das Blechpaket 22 umfassende (Kunststoffmantel) Kunst-stoffumspritzung 23 auf. Dabei sind die Statorzähne 20 an der dem Rotor 4 zugewandten Seite nicht mit der Kunststoffumspritzung 23 versehen. Die erweiterten Statorzähne 20 sind als Polschuhe ausgebildet.

Zwischen benachbarten Statorzähnen 20 ist dabei jeweils eine Statornut 24 gebildet, in welcher eine Spule 25 einer Statorwicklung aufgenommen ist. Die Statorwicklung wird dabei mittels Anschlüssen 26 zur Erzeugung eines Drehfeldes entsprechend bestromt. Die schlitzförmige Öffnung, welche zwischen den Pollaschen 21 gebildet ist und in Radialrichtung R die entsprechende Statornut 24 mit einem zwischen dem Rotor 4 und dem Stator 6 gebildeten Luftspalt verbindet, wird hierbei als Nutenschlitz 30 bezeichnet. Mit anderen Worten ist zwischen einander zugewandten Pollaschen 21 jeweils ein Nutenschlitz 30 gebildet.

Die Figuren 2a, b zeigen das Blechpaket 22 des Stators 6. Dieses ist aus einer Anzahl von Einzelbelchen 32 gebildet. Jedes der Einzelbleche weist dabei einen ringförmigen Jochabschnitt 34 und mit diesem einteilig, also monolithisch, Blechzähne 36 auf, welche sich radial vom Jochabschnitt 34 zum Mittelpunkt, mit anderen Worten nach innen, des Jochabschnitts 34 erstrecken. Zahnfußseitig (freiendseitig, innenseitig) sind die Blechzähne 36 in Umfangsrichtung U des Stators 6 unter Bildung von Blechlaschen 38 erweitert, so dass die Blechzähne 36 T-förmig ausgebildet sind. Die Einzelbelche 32 sind zum Blechpaket 22 miteinander gefügt, wobei das Statorjoch 19 aus den Jochabschnitten 34 der Einzelbleche 32, die Statorzähne 20 aus den Blechzähnen 36 und die Pollaschen 21 aus den Blechlaschen 38 gebildet sind.

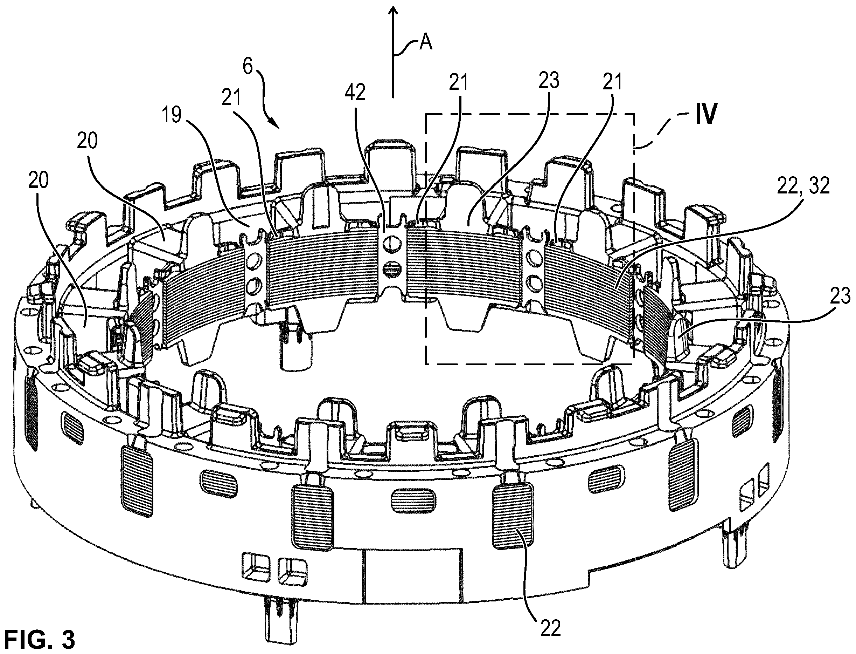

In Fig. 3 ist der Stator 6 mit dem Blechpaket 22 sowie mit der das Blechpaket 22 umfassenden Kunststoffumspritzung 23 dargestellt. Dabei ist in jeden der Nutenschlitze 30 jeweils ein Versteifungselement 42 eingebracht. Die Pollaschen 21 bilden dabei jeweils eine Anlageschulter 43 für die Versteifungselemente 42. Mit anderen Worten werden diese an einander zugewandten Pollaschen 21 benachbarter Statorzähne 20 in Radialrichtung R mittels der Anlageschultern 43 gehalten, wobei die Anlageschultern 43 mittels der entsprechenden Pollaschen 21 gebildet sind. Aufgrund der Versteifungselemente 42 sind die akustischen Eigenschaften des Stators 6 verändert. Insbesondere ist eine Schwingungsanregung des Stators 6 reduziert, eine gegebenenfalls angeregte Schwingung vergleichsweise stark gedämpft und/oder eine (Eigen-)Frequenz der Schwingung des Stators 6 in einen Bereich verschoben, in welchem eine Schwingungsanregung nicht zu erwarten ist.

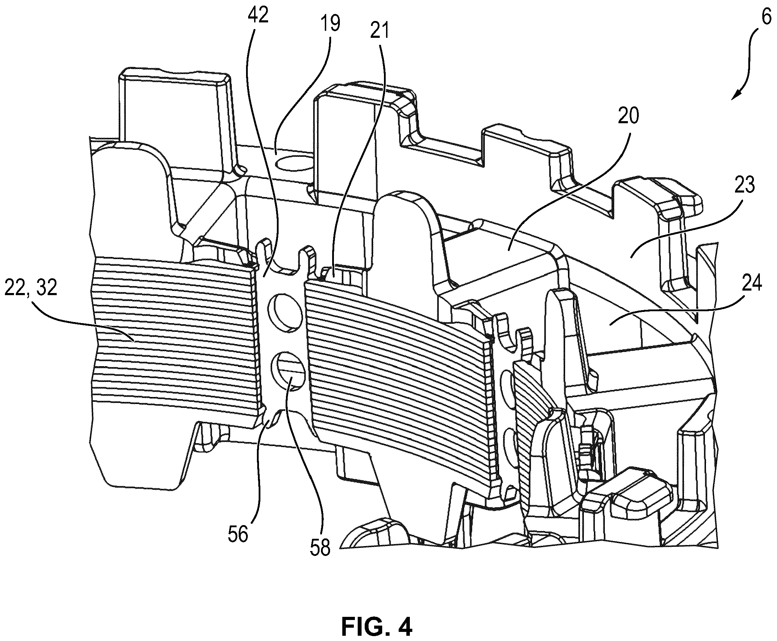

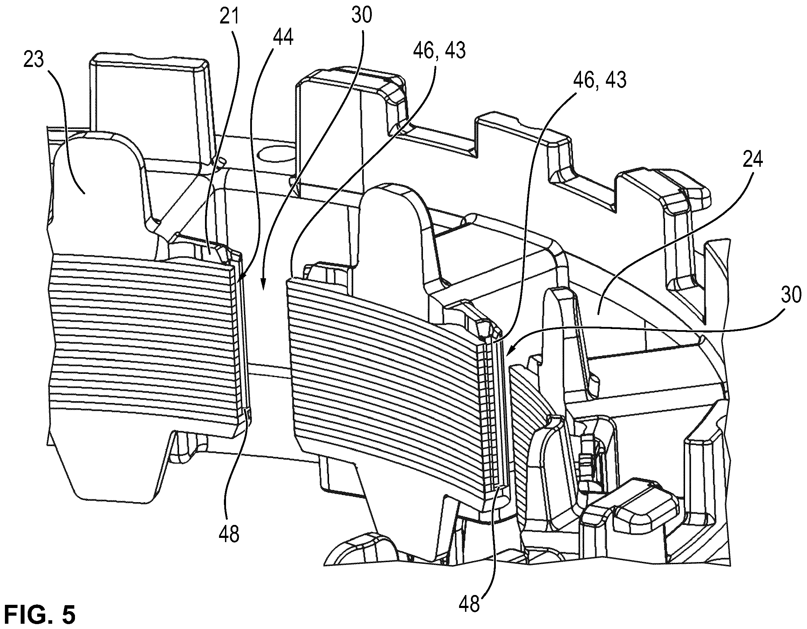

Fig. 4 und Fig. 5 zeigen in vergrößertem Ausschnitt gemäß Fig. 3 benachbarte Statorzähne 20 mit zwischen deren Pollaschen 21 gebildetem Nutenschlitz 30. In Fig. 5 ist dabei das Versteifungselement 42 nicht weiter dargestellt, um das Freiende bezüglich der Umfangsrichtung U der Pollaschen 21 besser erkennbar darzustellen. Der Stator 6 weist im freiendseitigen Bereich der Pollaschen 21 eine in Umfangsrichtung U offene und sich in Axialrichtung A erstreckende Nut 44 auf. Dabei bilden die Nutenwände 46 der Nut 44, welche sich in entlang der Umfangsrichtung U erstrecken, jeweils eine Anlageschulter 43 für das Versteifungselement 42. Im Zuge der Montage des Elektromotors 2 werden die Versteifungselemente 42 jeweils in die entsprechende Nut 44 eingebracht, so dass das Versteifungselement 42 folglich in Radialrichtung R formschlüssig mittels der mittels der Nutenwände 46 gebildeten Anlageschultern 43 im Nutenschlitz 30 gehalten ist.

Zur Bildung der Nut 44 weist das Blechpaket 22 an den Pollaschen 21 freiendseitig bezüglich der Umfangsrichtung U an der dem Statorjoch 19 zugewandten Seite eine Einkerbung auf. Die dem Statorjoch 19 gegenüberliegende Seite der Einkerbung der Pollaschen 21 bildet dabei die dem Luftspalt näherliegende Nutenwand 46 und somit die entsprechende Anlageschulter 43. Wie in Fig. 5 vergleichsweise deutlich erkennbar dargestellt ist, bildet dabei die Kunststoffumspritzung 23 die dem Statorjoch 19 näherliegende Nutenwand 46, während die dem Luftspalt, welcher zwischen dem Stator 6 und dem Rotor 4 gebildet ist, näherliegende Nutenwand 46 mittels des Blechpakets des entsprechenden Statorzahns 20 gebildet ist. Dabei sind die Nuten 44 in Axialrichtung A nicht durchgehend. An einer deren Endseiten weist die Nut eine weitere, im Folgenden als Anlage 48 bezeichnete Nutenwand auf, welche in einer Ebene senkrecht zur Axialrichtung A verläuft. Diese bildet mit dem Versteifungselement 42 einen Formschluss gegen ein Herauslösen des Versteifungselements 42 in Axialrichtung von der offenen Stirnseite der Nut 44 zur Anlage 48 hin.

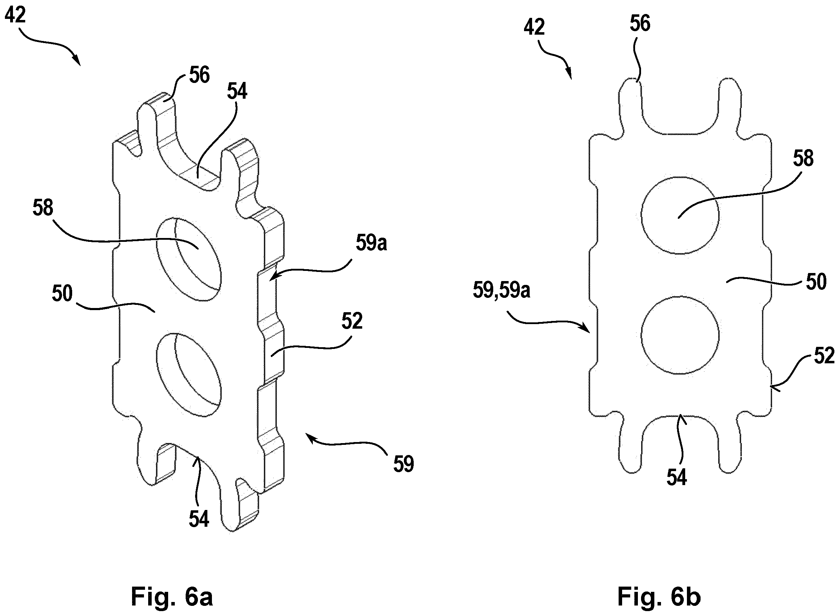

Die als Breitseiten 50 bezeichneten flächigen Seiten des als rechteckförmige Platte ausgeführten Versteifungselements 42 grenzen an als Längsseiten 52 bzw. als Querseiten 54 bezeichnete Seiten der Platte an. Das Versteifungselement 42 ist in den Figuren 6a und 6b in vergrößertem Maßstab in einer perspektivischen Ansicht bzw. in Draufsicht auf die Breitseite 50 dargestellt. Dabei weist das Versteifungselement 42 eine Ausdehnung (Dicke) senkrecht zu den Breitseite 50 auf, welche dem Abstand der Nutenwände 46 entspricht. Weiterhin weisen die Breitseite 50 und die auch als erste Schmalseiten bezeichneten Längsseiten 52 eine Ausdehnung (Länge) auf, welcher im Wesentlichen der Ausdehnung der Nut 44 in Axialrichtung A entspricht. Beide Querseiten 54, welche auch als stirnseitige Schmalseiten bezeichnet werden und welche an die Längsseiten 52 und an die Breitseiten 50 angrenzen, weisen jeweils eine Fügekontur 56 auf, welche wiederum als zwei Zapfen ausgebildet ist. Die Zapfen hintergreifen die Pollaschen 21 der entsprechenden Statorzähne 16 im Montagezustand, so dass ein Formschluss bezüglicher der Axialrichtung A gebildet ist.

Das Versteifungselement 42 ist aus einem Metall oder aus einer Legierung, hier beispielhaft aus einem nicht magnetischen Edelstahl gebildet. Vor einer Erstmontage stehen die Zapfen senkrecht zur stirnseitigen Schmalseite 54 ab. Im Zuge der Montage werden die Zapfen zur Herstellung des Formschlusses in Umfangsrichtung U verbogen.

Das Versteifungselement 42 ist hier einteilig und symmetrisch ausgeführt. Dabei ist das Versteifungselement 42 spiegelsymmetrisch bezüglich einer Ebene, welche durch die Mittelsenkrechte der Breitseite 50 und parallel zur Querseite 54 verläuft, und ebenfalls spiegelsymmetrisch bezüglich einer Ebene, welche durch die Mittelsenkrechte der Breitseite 50 und parallel zur Längsseite 52 gebildet ist.

Ferner weist das Versteifungselement 42 Durchgangsöffnungen 58 auf, welche als in die Breitseite 50 eingebrachte, durchgehende Bohrungen ausgeführt sind. Im Montagezustand münden diese in die entsprechende Statornut 44. Mittels der Durchgangsöffnungen 58 sind Wirbelstromverluste verringert. Des Weiteren ermöglichen die Durchgangsöffnungen 58 eine Luftzirkulation, insbesondere zur Kühlung.

Des Weiteren weisen die Versteifungselemente 42 zur Reduzierung einer Kontaktfläche mit den Anlageschultern 43 und somit zur Reduzierung einer Kontaktfläche mit dem Blechpaket 22 jeweils eine Kontur 59 im entsprechenden Anlagebereich auf. Die Kontur 59 ist dabei mittels zwei Ausnehmungen 59a von der jeweiligen Längsseite 52 gebildet. Mit anderen Worten sind die Ausnehmungen 59a in die jeweilige Längsseiten 52 des Versteifungselements 42 eingebracht.

Gemäß einer nicht weiter dargestellten Alternative des Versteifungselements 42 ist dieses zusätzlich mit einer Beschichtung versehen, welche den elektrischen Widerstand des Versteifungselements 42 erhöht.

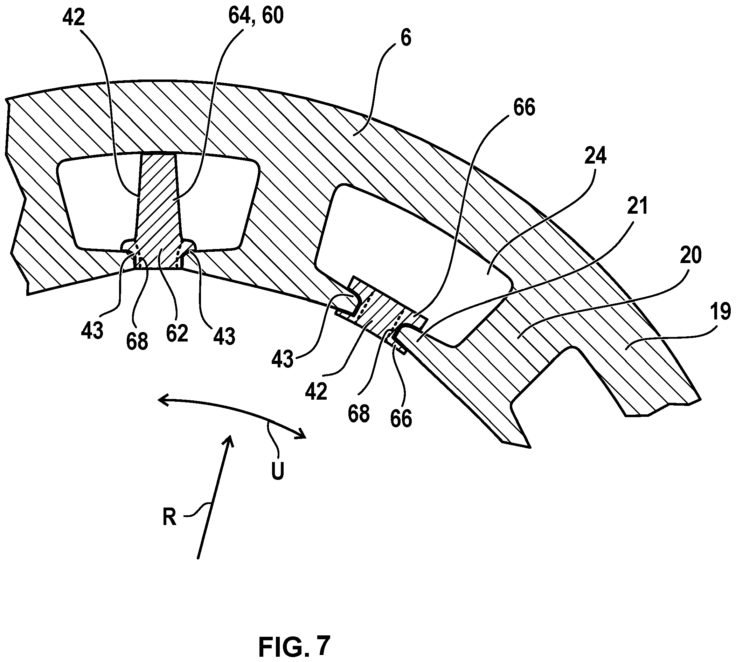

Die Fig. 7 zeigt eine Draufsicht auf einen Querschnitt durch den Stator 6, mit einer Schnittebene, welche senkrecht zur Axialrichtung A verläuft. Dabei sind zwei weitere alternative Ausgestaltungen der Versteifungselemente 42 dargestellt, welche mittels der mittels der Pollaschen 32 gebildeten Anlageschultern 43 in Radialrichtung gehalten sind. Die erste dieser beider Varianten weist dabei einen in Radialrichtung R verlaufenden Steg 60 auf, welcher am Statorjoch 19 anliegt. Das Versteigungselement 42 in dieser Variante weist also einen T-förmigen Querschnitt auf, dessen horizontaler T-Schenkel 62 an der mittels der Pollaschen 32 gebildeten Anlageschultern 43 anliegt, und der der vertikale T-Schenkel 64 am Statorjoch 19 gestützt ist. Dieses Versteifungselement 42 wird in die entsprechende Statornut 24 eingepresst und dort beispielsweise mittels (Ultraschall-) Schweißen stoffschlüssig gefügt.

Die zweite alternative Variante des Versteifungselements 42 der Fig. 7 weist in der gezeigten Schnittebene einen im Wesentlichen H-förmigen Querschnitt auf. Die vertikalen H-Schenkel 66 des Versteifungselements 42 dieser Variante umfassen die mittels der Pollaschen 32 gebildeten Anlageschultern 43 benachbarter Statorzähne 20. Der Abstand der vertikalen H-Schenkel 66 ist dabei derart gewählt, dass ein Einpressmaß zugelassen ist. Mit anderen Worten ist das Versteifungselement 42 kraftschlüssig durch einpressen an den Anlageschultern 43 gehallten. Zusätzlich ist dieses mittels eines Klebers oder alternativ mittels (Ultraschall-) Schweißen stoffschlüssig an die Anlageschultern 43 gefügt. Dabei weist der in den Luftspalt ragende vertikale H-Schenkel 66 im Vergleich zum anderen vertikalen H-Schenkel 66 eine kleinere Ausdehnung in einer Richtung entlang des horizontalen H-Schenkels, im Montagezustand also in Radialrichtung R, auf.

Weiterhin zeigen die die punktiert, dargestellten Linien den Verlauf der Oberfläche 68 des jeweiligen Versteifungselements 42 im Bereich der Anlageschultern 43 in einer Schnittebene, welche parallel und beabstandet zur Schnittebene der Fig. 7 ist. Die Versteifungselemente 42 liegen dabei in dieser Schnittebene nicht an den Pollaschen 21 bzw. nicht an den Anlageschultern 43 an. Somit ist in dieser Ebene ein Kontakt in des Versteigungselements 42 mit dem Blechpaket 22 vermieden. Aufgrund dessen sind ein Kontakt (eine Kontaktfläche) mit dem Blechpaket 22 des Stators 6 und damit einhergehend bei Betrieb des Elektromotors 2 gegebenenfalls entstehende Wirbelströme reduziert.

Die Erfindung ist nicht auf die vorstehend beschriebenen Ausführungsbeispiele beschränkt. Vielmehr können auch andere Varianten der Erfindung vom Fachmann hieraus abgeleitet werden, ohne den Gegenstand der Erfindung zu verlassen. Insbesondere sind ferner alle im Zusammenhang mit den Ausführungsbeispielen beschriebenen Einzelmerkmale auch auf andere Weise miteinander kombinierbar, ohne den Gegenstand der Erfindung zu verlassen. Die Erfindung wird durch die nachfolgenden Ansprüche definiert.

### Bezugszeichenliste

- 1: Kühlerlüfter
- 2: Elektromotor
- 4: Rotor
- 6: Stator
- 8: Achsstift
- 10: Lager
- 11: Lüfterrad
- 12: Luftleitschaufel
- 13: Kappe
- 14: Motorträger
- 15: Flansch
- 16: Elektronikfach
- 17: Motorelektronik
- 18: Elektronikfachdeckel
- 19: Statorjoch
- 20: Statorzahn
- 21: Pollasche
- 22: Blechpaket
- 23: Kunststoffumspritzung
- 24: Statornut
- 25: Spule
- 26: Anschlüsse
- 30: Nutenschlitz
- 32: Einzelblech
- 34: Jochabschnitt
- 36: Blechzahn
- 38: Blechlasche
- 42: Versteifungselement
- 43: Anlageschulter
- 44: Nut
- 46: Nutenwand
- 48: Anlage
- 50: Breitseite
- 52: Längsseite/erste Schmalseite
- 54: Querseite/zweite Schmalseite
- 56: Fügekontur
- 58: Durchgangsöffnungen
- 59: Kontur
- 59a: Ausnehmung
- 60: Steg
- 62: horizontaler T-Schenkel
- 64: vertikaler T-Schenkel
- 66: vertikaler H-Schenkel
- 68: Oberfläche

- A: Axialrichtung
- D: Drehachse
- R: Radialrichtung
- U: Umfangsrichtung

## Patentansprüche

1. Elektromotor (2), aufweisend einen um eine in Axialrichtung (A) verlaufende Drehachse (D) drehbar gelagerten Rotor (4) und einen Stator (6) mit einem Blechpaket (22), welches ein Statorjoch (19) und von diesem radial gerichtete Statorzähne (20) des Stators (6) bildet,
- wobei die Statorzähne (20) unter Bildung von sich in Umfangsrichtung (U) des Stators (6) erstreckenden Pollaschen (21) zahnfußseitig T-förmig erweitert sind,
- wobei die Pollaschen (21) jeweils eine Anlageschulter (43) bilden,
- wobei zwischen benachbarten Statorzähnen (20) jeweils eine Statornut (24) zur Aufnahme von Spulen (25) einer Statorwicklung und zwischen einander zugewandten Pollaschen (21) jeweils ein Nutenschlitz (30) gebildet ist,
- wobei eine Anzahl von Versteifungselementen (42) vorgesehen ist, die in eine entsprechende Anzahl von Nutenschlitzen (30) eingebracht sind,
- wobei die Versteifungselemente (42) an den einander zugewandten Pollaschen (21) benachbarter Statorzähne (20) in Radialrichtung (R) mittels der Anlageschultern (43) gehalten sind, und
- wobei die Versteifungselemente (42) zur Reduzierung einer Kontaktfläche mit den Anlageschultern (43) jeweils eine Kontur (59) im entsprechenden Anlagebereich aufweisen,
- wobei die Kontur (59) des jeweiligen Versteifungselements (42) mittels einer Aussparung oder einer Ausnehmung (59a) einer der jeweiligen Pollasche (21) zugewandten Schmalseite (52) gebildet ist,
- wobei das jeweilige Versteifungselement (42) aus einem Metall oder aus einer Legierung gebildet ist, und
- wobei das oder jedes der Versteifungselemente (42) mit einer Beschichtung versehen ist, welche den elektrischen Widerstand des Versteifungselements (42) erhöht.

2. Elektromotor (2) nach Anspruch 1,
**dadurch gekennzeichnet,**
**dass** das Blechpaket (22) aus einer Anzahl von Einzelblechen (32) gebildet ist,
- wobei jedes Einzelblech (32) einen ringförmigen Jochabschnitt (34) und mit diesem einteilige, radial gerichtete Blechzähne (36) aufweisen, die zahnfußseitig unter Bildung von sich in Umfangsrichtung (U) des Stators (6) erstreckenden Blechlaschen (38) T-förmig erweitert sind, und
- wobei das Statorjoch (34) aus den Jochabschnitten (34) der Einzelbleche (32), die Statorzähne (20) aus den Blechzähnen (36) der Einzelbleche (32) und die Pollaschen (21) aus den Blechlaschen (38) der Einzelbleche (32) gebildet sind.

3. Elektromotor (2) nach Anspruch 1 oder 2
**dadurch gekennzeichnet,**
**dass** die Pollaschen (21) freiendseitig eine in Umfangsrichtung (U) offene und sich in Axialrichtung (A) erstreckende Nut (44) aufweisen, wobei die jeweilige Anlageschulter (43) für das Versteifungselements (42) von einer der Nutenwände (46) der Nut (44) gebildet ist.

4. Elektromotor (2) nach Anspruch 3,
**dadurch gekennzeichnet,**
**dass** der Stator (6), insbesondere dessen Blechpaket (22), eine Kunststoffumspritzung (23) aufweist, mittels welcher einer der Nutenwände (46) der Nut (44) gebildet ist.

5. Elektromotor (2) nach einem der Ansprüche 1 bis 4,
**dadurch gekennzeichnet,**
- **dass** das Versteifungselement (42) als, insbesondere rechteckförmiges, vorzugsweise zur Längs- und Querachse spiegelsymmetrisches, plattenartiges Bauteil ausgeführt ist, und/oder
- **dass** das Versteifungselement (42) aus einem nicht magnetischen Material gebildet ist.

6. Elektromotor (2) nach einem der Ansprüche 1 bis 5,
**dadurch gekennzeichnet,**
**dass** das Versteifungselement (42) an zumindest einer stirnseitigen Schmalseite (54) eine Fügekontur (56) für einen Formschluss bezüglich der Axialrichtung (A) mit der jeweiligen Pollasche (21) aufweist.

7. Elektromotor (2) nach Anspruch 6,
**dadurch gekennzeichnet,**
**dass** die Fügekontur (56) als Zapfen ausgebildet ist, welche im Montagezustand mit den Pollaschen (21) einen Hintergriff ausbilden.

8. Elektromotor (2) nach einem der Ansprüche 1 bis 7,
**dadurch gekennzeichnet,**
**dass** das Versteifungselement (42) mit mindestens einer in die jeweilige Statornut (24) mündenden Durchgangsöffnung (58) versehen ist.

9. Kühlerlüfter (1), insbesondere für ein Kraftfahrzeug, mit einem Elektromotor (2) nach einem der Ansprüche 1 bis 8.

## Claims

1. Electric motor (2), having a rotor (4) mounted rotatably about an axis of rotation (D) extending in the axial direction (A) and a stator (6) with a laminated core (22), which forms a stator yoke (19) and stator teeth (20) of the stator (6), which are directed radially therefrom,
- wherein the stator teeth (20) are widened on the tooth base side in a T-shape to form pole tabs (21) extending in the circumferential direction (U) of the stator (6),
- wherein the pole tabs (21) each form a bearing shoulder (43),
- wherein a respective stator slot (24) for receiving coils (25) of a stator winding is formed between adjacent stator teeth (20) and a respective slot (30) is formed between mutually facing pole tabs (21),
- wherein a number of reinforcing elements (42) are provided, which are inserted into a corresponding number of slot openings (30),
- wherein the reinforcing elements (42) are held on the mutually facing pole tabs (21) of adjacent stator teeth (20) in the radial direction (R) by means of the bearing shoulders (43), and
- wherein the reinforcing elements (42) each have a contour (59) in the corresponding bearing region for reducing a contact area with the contact shoulders (43),
- wherein the contour (59) of the respective reinforcing element (42) is formed by means of a cutout or a recess (59a) of a narrow side (52) facing the respective pole a tab (21),
- wherein the respective reinforcing element (42) is formed of a metal or an alloy, and
- wherein the or each of the reinforcing elements (42) is provided with a coating, which increases the electrical resistance of the reinforcing element (42).

2. Electric motor (2) according to claim 1,
**characterized in**
**that** the laminated core (22) is formed from a number of individual laminations (32),
- wherein each individual lamination (32) has an annular yoke portion (34) and radially directed lamination teeth (36) integral therewith, which are widened in a T-shape on the tooth base side to form lamination tabs (38) extending in the circumferential direction (U) of the stator (6), and
- wherein the stator yoke (34) is formed from the yoke portions (34) of the individual laminations (32), the stator teeth (20) are formed from the lamination teeth (36) of the individual laminations (32), and the pole tabs (21) are formed from the lamination tabs (38) of the individual laminations (32).

3. Electric motor (2) according to claim 1 or 2
**characterized in**
**that** the pole tabs (21) have a slot (44) at the free-end side, which is open in the circumferential direction (U) and extends in the axial direction (A), wherein the respective bearing shoulder (43) for the reinforcing element (42) is formed by one of the slot walls (46) of the slot (44).

4. Electric motor (2) according to claim 3,
**characterized in**
**that** the stator (6), in particular its laminated core (22), has a plastic overmolding (23), by means of which one of the slot walls (46) of the slot (44) is formed.

5. Electric motor (2) according to one of claims 1 to 4,
**characterized in**
- **that** the reinforcing element (42) is designed as a plate-like component, in particular rectangular, preferably mirror-symmetrical with respect to the longitudinal and transverse axes, and/or
- **that** the reinforcing element (42) is formed from a non-magnetic material.

6. Electric motor (2) according to one of claims 1 to 5,
**characterized in**
**that** the reinforcing element (42) has, on at least one end-face narrow side (54), a joining contour (56) for a form fit with respect to the axial direction (A) with the respective pole tab (21).

7. Electric motor (2) according to claim 6,
**characterized in**
**that** the joining contour (56) is formed as a peg, which, in the assembled state, forms a rear grip with the pole tabs (21).

8. Electric motor (2) according to one of claims 1 to 7,
**characterized in**
**that** the reinforcing element (42) is provided with at least one through-opening (58) opening into the respective stator slot (24).

9. Radiator fan (1), in particular for a motor vehicle, with an electric motor (2) according to one of claims 1 to 8.

## Revendications

1. Moteur électrique (2), comprenant un rotor (4) monté à rotation autour d'un axe de rotation (D) s'étendant dans la direction axiale (A) et un stator (6) avec un paquet de tôles (22), qui forme une culasse de stator (19) et des dents de stator (20) du stator (6) orientées radialement à partir de celle-ci,
- les dents de stator (20) étant élargies en forme de T du côté du pied de dent en formant des pattes de pôle (21) s'étendant dans la direction périphérique (U) du stator (6),
- les pattes de pôle (21) de la borne formant chacune un épaulement d'appui (43) d'installation,
- une rainure de stator (24) destinée à recevoir des bobines (25) d'un enroulement de stator étant formée respectivement entre des dents de stator (20) voisines et une fente de rainure (30) étant formée respectivement entre des pattes de pôle (21) tournées l'une vers l'autre,
- dans lequel il est prévu un certain nombre d'éléments de renforcement (42), qui sont insérés dans un nombre correspondant de fentes de rainure (30),
- les éléments de renforcement (42) étant maintenus sur les pattes de pôle (21) tournées l'une vers l'autre de dents de stator (20) voisines dans la direction radiale (R) au moyen des épaulements d'appui (43), et
- les éléments de renforcement (42) comprenant chacun un contour (59) dans la zone d'appui correspondante pour réduire une surface de contact avec les épaulements d'appui (43),
- le contour (59) de l'élément de renforcement respectif (42) étant formé au moyen d'un évidement ou d'une cavité (59a) d'un côté étroit (52) tourné vers la patte de pôle respective (21),
- l'élément de renforcement respectif (42) étant formé d'un métal ou d'un alliage, et
- le ou chacun des éléments de renforcement (42) étant pourvu d'un revêtement, qui augmente la résistance électrique de l'élément de renforcement (42).

2. Moteur électrique (2) selon la revendication 1,
**caractérisé en ce**
**que** le paquet de tôles (22) est formé d'un certain nombre de tôles individuelles (32),
- chaque tôle individuelle (32) comprenant une section de culasse annulaire (34) et des dents de tôle (36) orientées radialement et d'un seul tenant avec celle-ci, qui sont élargies en forme de T du côté du pied de dent en formant des pattes de tôle (38) s'étendant dans la direction périphérique (U) du stator (6), et
- la culasse de stator (34) étant formée par les sections de culasse (34) des tôles individuelles (32), les dents de stator (20) étant formées par les dents de tôle (36) des tôles individuelles (32) et les pattes de pôle (21) étant formées par les pattes de tôle (38) des tôles individuelles (32).

3. Moteur électrique (2) selon la revendication 1 ou 2
**caractérisé en ce**
**que** les pattes de pôle (21) comprennent du côté du dégagement une rainure (44) ouverte dans la direction périphérique (U) et s'étendant dans la direction axiale (A), l'épaulement d'appui (43) respectif pour l'élément de renforcement (42) étant formé par l'une des parois de rainure (46) de la rainure (44).

4. Moteur électrique (2) selon la revendication 3,
**caractérisé en ce**
**que** le stator (6), en particulier son paquet de tôles (22), comprend un surmoulage en matière plastique (23), au moyen duquel est formée l'une des parois (46) de la rainure (44).

5. Moteur électrique (2) selon l'une des revendications 1 à 4,
**caractérisé en ce**
- **que** l'élément de renforcement (42) est réalisé sous la forme d'un composant en forme de plaque, en particulier rectangulaire, de préférence symétrique par rapport à l'axe longitudinal et à l'axe transversal, et/ou
- **que** l'élément de renforcement (42) est formé d'un matériau non magnétique.

6. Moteur électrique (2) selon l'une des revendications 1 à 5,
**caractérisé en ce**
**que** l'élément de renforcement (42) comprend, sur au moins un petit côté frontal (54), un contour d'assemblage (56) pour une liaison par complémentarité de forme par rapport à la direction axiale (A) avec la patte de pôle (21) respective.

7. Moteur électrique (2) selon la revendication 6,
**caractérisé en ce**
**que** le contour d'assemblage (56) est réalisé sous la forme de tenon, qui, à l'état monté, forme une prise arrière avec les pattes de pôle (21).

8. Moteur électrique (2) selon l'une des revendications 1 à 7,
**caractérisé en ce**
**que** l'élément de renforcement (42) est pourvu d'au moins une ouverture de passage (58) débouchant dans la rainure de stator (24) respective.

9. Ventilateur de radiateur (1), notamment pour un véhicule automobile, comprenant un moteur électrique (2) selon l'une des revendications 1 à 8.
